# FASCICULE DE BREVET EUROPEEN

(11) **EP 1 791 352 B1**
(45) Date de publication et mention de la délivrance du brevet: **04.06.2008**
(21) Numéro de dépôt: 06380181.5
(22) Date de dépôt: 29.06.2006
(51) Int. Cl.: H04N 5/44, H04N 5/46

(54) **Transmodulateur DVB-S à DVB-T**
DVB-S-auf-DVB-T-Transmodulator
DVB-S-to-DVB-T transmodulator

(30) Priorité: 24.11.2005 ES 200502907
(43) Date de publication de la demande: 30.05.2007
(73) Titulaire: Angel Iglesias S.A., 20009 San Sebastian (ES)
(72) Inventeur: Dominguez Bonini, Marco, 20009 San Sebastian (Gipuzkoa) (ES)
(74) Mandataire: Urizar Barandiaran, Miguel Angel

(56) Documents cités:
- WO-A-02/096098
- WO-A-03/084217
- WO-A-20/04002147

## Description

Lorsque les signaux de télévision numérique (satellite, terrestre ou Câble) DVB-S/C/T (Digital Video Broadcasting-Satellite/Cable/Terrestrial) doivent être captés par une installation qui utilise un moyen de distribution différent, ils sont reçus par exemple par satellite (DVB-S) et ils doivent être transmis par câble (DVB-C), il faut effectuer une transmodulation.

Depuis plusieurs années, nous recevons des signaux de télévision numérique par satellite qui utilisent le standard DVB-S. En général, il faut un boîtier supplémentaire qui convertit les signaux numériques en signaux analogiques pour les visionner sur un téléviseur conventionnel. Cet élément est connu comme Set-Top Box ou STB.

La période de transition de l'implantation de la télévision numérique terrestre (DVB-T) jusqu'à la disparition complète des récepteurs analogiques traditionnels exigera un élément semblable pour convertir les signaux numériques terrestres en signaux analogiques.

Afin d'éviter d'avoir deux STB chez soi, on propose en W02004/002147 un système permettant de convertir un signal DVB-T en signal DVB-S.

Mais personne n'a pris en compte le fait que dans un futur le nombre de STB terrestre dépasse largement celui de STB satellitaux.

Le sollicitant apporte une solution avec la présente invention pour combler le vide rencontré sur le marché.

Le sollicitant a développé un transmodulateur qui convertit un signal DVB-S en signal DVB,-T permettant d'avoir un seul boîtier supplémentaire puisque le reste du système est intégré au propre appareil de l'usager.

Le transmodulateur, objet de la présente invention, permet d'utiliser un récepteur de télévision numérique terrestre conventionnel pour recevoir des signaux de télévision numérique satellitaux au moyen de la transmodulation et du traitement du signal.

Le transmodulateur, objet de la présente invention, consiste à modifier les tableaux SI *(Service Information),* adapter la vitesse d'horloge du signal reçu à une vitesse supérieure standard en DVB-T, remplir les creux, corriger les marques d'horloge du signal de télévision numérique et éliminer les services.

Pour mieux comprendre l'objet de la présente invention, une forme choisie de réalisation pratique a été représentée sur les plans, susceptible de changements accessoires qui ne modifieront pas son fondement.

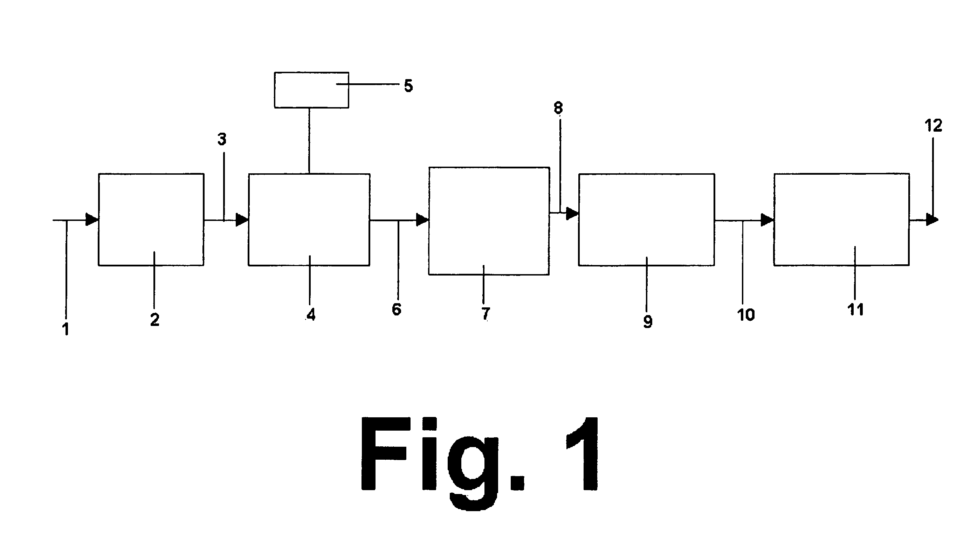

La figure 1 est une représentation sous forme de diagramme de blocs d'une réalisation pratique de l'objet de l'invention.

Un exemple de réalisation pratique, non limitatif, de la présente invention est décrit ci-après.

Le transmodulateur DVB-S a DVB-T objet de l'invention est composé des parties décrites dans la figure 1.

Le signal de satellite DVB-S (1) est reçu par un bloc récepteur DVB-S (2) qui démodule et décode les signaux de télévision numérique satellite (DVB-S) (1) et remet un train de bits avec un format défini par le standard MPEG-2 connu comme trame de transport ou TS (3), son sigle en anglais.

La trame de transport MPEG2 est définie et standardisée dans la norme ISO/IEC 13818-1.

Un bloc processeur de TS (4) se charge de monitoriser, d'extraire et de remplacer le contenu du TS (3) selon les instructions conventionnelles données par un microcontrôleur (5). Ces opérations ont pour but d'analyser et de modifier les informations des différents tableaux SI (Service Information) définis par les standards MPEG-2 et DVB.

Les signaux DVB-S, contrairement aux signaux DVB-T n'ont aucune restriction de vitesse de transfert de bits. Par conséquent, le système requiert la capacité d'adapter la vitesse du TS (3) reçue du satellite à une vitesse définie dans le standard DVB-T (1).

Le signal de sortie (6) du bloc processeur de TS (4) est envoyé à un bloc adaptateur d'horloge (7) qui ajoute des trames vides au signal TS pour que la vitesse de transfert de bits de son signal de sortie (8) (TS modifié) corresponde à la vitesse standard DVB-T requise, c'est à dire, ce signal de sortie (8) a déjà une vitesse adéquate pour l'objet de la présente invention.

Ensuite, on dispose un bloc modulateur DVB-T (9) qui module et code le TS modifié(8) dans un signal DVB-T (10) présenté de préférence dans une fréquence intermédiaire de 10 à 100 MHz, bien que pouvant travailler sur une bande base avec des signaux numériques I et Q avec un modulateur I&Q adéquat.

Le signal DVB-T (10) dans une fréquence intermédiaire est converti en un signal analogique par un convertisseur numérique-analogique (non représenté) et au moyen d'un bloc convertisseur agile (11), on déplace ce signal analogique au signal de sortie (12) à une fréquence de TV comprise entre 45 et 862 MHz.

Exemple d'adaptation de vitesse :
Un signal typique (1) DVB-S reçu par satellite avec les caractéristiques suivantes : QPSK, 27.5MSym/s, code rate ¾, ce qui correspond au taux de bits utile d'environ 38Mbps.
Un signal DVB-T pour télévision numérique terrestre (12) typique a les caractéristiques suivantes : COFDM, 8K, 64 QAM, code rate 3/4, intervalle de garde 1/4. Cette configuration permet un taux de bits utile d'environ 22.4Mbps.

Dans de telles circonstances, il resterait 15.6MSym/s. Il est donc nécessaire d'éliminer des informations de la trame (3) pour pouvoir la retransmettre. Si nous éliminons 4 services de télévision de 4.5Mbps chacun, on enlèverait 17Mbps et il resterait 21Mbps avec des informations à remoduler en DVB-T.

L'adaptateur d'horloge (7) devra ajouter 1.4Mbps de trames vides pour que la vitesse de sortie (8) soit nécessaire pour la configuration sélectionnée antérieurement.

## Revendications

1. Transmodulateur pour la réception de signaux satellitaux de télévision numérique au moyen d'un récepteur de télévision numérique terrestre, **caractérisé par le fait q**u'il est muni de :
a) un bloc récepteur DVB-S (2) de signaux DVB-S (1) qui remodule et décode les signaux DVB-S (1) et remet une trame de transport (TS) (3) à
b) un bloc processeur de TS (4) qui monitorise, extrait et remplace le contenu de la trame de transport (TS) (3) sous le contrôle d'un microprocesseur (5) programmé, en envoyant son signal de sortie (6) à
c) un bloc adaptateur d'horloge (7) qui ajoute des trames vides à la trame de transports (TS) en augmentant la vitesse de transfert de bits, en envoyant son signal de TS modifié (8) à
d) un bloc modulateur DVB-T (9) qui module et code le TS modifié (8) dans un signal DVB-T (10) qui est converti en un signal analogique et qu'
e) un bloc convertisseur agile (11) convertit en signal de sortie (12) à une fréquence de TV comprise entre 45 et 862 MHz.

## Claims

1. Transmodulator for the reception of digital television satellite through a digital terrestrial television receiver, **characterized** as consisting of:
a) a block DVB-S (2) which receives signals DVB-S (1) and which remodulates and decodes the signals DVB-S (1) and delivers a Transport Stream (TS) (3) to
b) a block which processes TS (4) which monitors, extracts, and substitutes the content of the Transport Stream (TS) (3) under the control of a programmed microprocessor (5) sending its output signal (6) to
c) a clock adaptor block (7) which adds empty frames to the Transport Stream (TS) increasing the speed of bit transference, sending its modified TS signal (8) to
d) a modulator block DVB-T (9) which modulates and codes the modified TS (8) in a signal DVB-T (10) which is converted into an analog signal , and which
e) a dynamic block converter (11) converts into an output signal (12) at a TV frequency of between 45 and 862 MHz.

## Patentansprüche

1. Transmodulator für den Digitalfernseher-Satellitensignalempfang anhand eines digitalen terrestrischen TV-Receivers, der sich **dadurch kennzeichnet, dass** er aus Folgendem besteht:
a) einem DVB-S (2) Receiver-Block für DVB-S (1) Signale, der die DVB-S (1) Signale ummoduliert und entschlüsselt und ein Transportraster (TS) (3) an
b) einen TS (4) Verarbeitungsblock übergibt, der den Inhalt des (TS) Transportrasters (3) unter Aufsicht eines programmierten Mikroprozessors (5) überwacht, entnimmt und ersetzt, und sein Ausgangssignal (6) an
c) einen Programmieradapterblock (7) sendet, der dem Transportraster (TS) leere Raster hinzufügt, indem er die Bit-Übertragungsgeschwindigkeit erhöht und sein geändertes TS Signal (8) an
d) einen DVB-T (9) Modulatorblock sendet, der das geänderte TS (8) in ein DVB-T (10) Signal moduliert und verschlüsselt, das in ein Analogsignal verwandelt und von
e) einem schnellen Konvertierungsblock (11) in ein Ausgangssignal (12) mit einer TV-Frequenz zwischen 45 und 862 MHz umgewandelt wird.
